# EUROPÄISCHE PATENTSCHRIFT

(11) **EP 2 848 294 B1**
(45) Veröffentlichungstag und Bekanntmachung des Hinweises auf die Patenterteilung: **18.11.2015**
(21) Anmeldenummer: 13183959.9
(22) Anmeldetag: 11.09.2013
(51) Int. Cl.: B01D 39/08

(54) **FILTEREINRICHTUNG UND FILTERELEMENT ZUM BEHANDELN EINER SPÜLFLÜSSIGKEIT FÜR EINE MATERIALABTRAGENDE BEARBEITUNG SOWIE VERFAHREN ZUR MATERIALABTRAGENDEN BEARBEITUNG**
FILTERING DEVICE AND FILTER ELEMENT FOR TREATING A RINSING FLUID FOR PROCESSING WHICH REMOVES MATERIAL AND METHOD OF PROCESSING WHICH REMOVES MATERIAL
DISPOSITIF DE FILTRATION ET ÉLÉMENT DE FILTRATION POUR LE TRAITEMENT D'UN LIQUIDE DE RINÇAGE POUR UN USINAGE PAR ENLÈVEMENT DE MATIÈRE ET PROCÉDÉ D'USINAGE PAR ENLÈVEMENT DE MATIÈRE

(43) Veröffentlichungstag der Anmeldung: 18.03.2015
(73) Patentinhaber: Sefar AG, 9410 Heiden (CH)
(72) Erfinder: Erlenmaier, Isabell, 9410 Heiden (CH); Dietmayer, Christian, 9410 Heiden (CH); Gurtner, Christian, 9410 Heiden (CH); Maurer, Christoph, 9410 Heiden (CH)
(74) Vertreter: Wunderlich, Rainer

(56) Entgegenhaltungen:
- US-A- 3 327 866
- US-A- 6 015 499

## Beschreibung

Die Erfindung betrifft eine Filtereinrichtung zum Behandeln einer Spülflüssigkeit für eine materialabtragende Bearbeitung, mit einem Filterelement, durch welches die Spülflüssigkeit zum Abtrennen von abgetragenen Materialteilchen hindurchleitbar ist, gemäß dem Oberbegriff des Anspruchs 1.

Die Erfindung betrifft weiterhin ein Filterelement für eine derartige Filtereinrichtung sowie ein Verfahren zur materialabtragenden Bearbeitung, wobei die abgetragenen Materialteilchen mittels einer Spülflüssigkeit abtransportiert und mittels einer Filtereinrichtung aus der Spülflüssigkeit abgetrennt werden, gemäß dem Oberbegriff des Anspruchs 12.

Bei der materialabtragenden Bearbeitung, insbesondere bei der Metallbearbeitung mittels einer Werkzeugmaschine, wird an das materialabtragende Werkzeug kontinuierlich Spülflüssigkeit zugeführt. Die Spülflüssigkeit dient insbesondere dazu, die bei der Bearbeitung abgetragenen Materialteilchen fortzuspülen und so von der Bearbeitungsstelle zu entfernen. Darüber hinaus kann die Spülflüssigkeit auch zur Kühlung und/oder Schmierung an der Bearbeitungsstelle dienen.

Um den Verbrauch an Spülflüssigkeit begrenzt zu halten, ist es üblich, diese in einen Kreislauf zu führen, in welchen eine Filtereinrichtung zum Abtrennen der abgetragenen Materialteilchen aus der Spülflüssigkeit ausgebildet ist. Hierzu weist die Filtereinrichtung ein Filterelement, üblicherweise ein Filtergewebe auf, welches von der Spülflüssigkeit durchströmt wird und an dessen Filtrationsoberseite sich die abgetragenen Materialteilchen als Filtrationsschicht anlagern.

Um ein Zusetzen des Filterelementes durch die Filtrationsschicht zu verhindern, ist es üblich, das Filterelement regelmäßig zu reinigen und die Filtrationsschicht zu entfernen. Hierzu kann die Filtereinrichtung als ein umlaufender Bandfilter ausgebildet sein, welcher eine Reinigungsstation durchläuft. Zur Entfernung der häufig relativ scharfkantigen, abgetragenen Materialteilchen wird die Filtrationsschicht etwa mit einem aufgedüsten Reinigungsfluid behandelt, durch welche die angelagerten Materialteilchen von der Filtrationsoberseite entfernt werden. Trotz einer solchen regelmäßigen Reinigung setzen sich die Filterelemente allmählich zu, wodurch die Filterleistung des Filterelementes herabgesetzt wird und dieses dann ersetzt werden muss.

Das Dokument US 6 015 499 A offenbart eine Filtereinrichtung zum Behandeln einer Flüssigkeit mit einer Filtergewebeschicht, welche mit einer Köperbindung ausgebildet ist.

Dabei gilt, je kleiner die Poren oder die Filtrationsöffnungen des Filterelementes, umso schneller setzt sich dieses zu. Allerdings können die Filterporen des Filterelements nicht beliebig vergrößert werden, da ansonsten nicht der gewünschte hohe Abtrenngrad bei der Filtration erreicht wird und zu viele Materialpartikel wieder an der Bearbeitungsstelle der Werkzeugmaschine rückgeführt werden. Dies kann den Verschleiß des Bearbeitungswerkzeuges und der Maschine insgesamt erhöhen sowie die Funktion der Spülflüssigkeit an der Bearbeitungsstelle beeinträchtigen.

Der Erfindung liegt die **Aufgabe** zugrunde, eine Filtereinrichtung zum Behandeln einer Spülflüssigkeit für eine materialabtragende Bearbeitung, ein Filterelement hierfür sowie ein Verfahren zur materialabtragenden Bearbeitung anzugeben, mit welchen ein hoher Abtrenngrad von Materialteilchen aus der Spülflüssigkeit gewährleistet und gleichzeitig eine hohe Standzeit des Filterelementes erreichbar sind.

Die Aufgabe wird zum einen durch eine Filtereinrichtung zum Behandeln einer Spülflüssigkeit für eine materialabtragende Bearbeitung mit den Merkmalen des Anspruchs 1 gelöst. Bevorzugte Ausführungsformen dieser Filtereinrichtung sind in den abhängigen Ansprüchen angegeben.

Die erfindungsgemäße Filtereinrichtung ist dadurch gekennzeichnet, dass das Filterelement ein Filtergewebe aufweist, an dessen Filtrationsoberseite Gewebeporen als ausgeprägte Längsschlitze ausgebildet sind, welche ein Verhältnis Länge zu Breite von größer gleich 4 : 1 aufweisen.

Die Erfindung beruht auf der Erkenntnis, dass ein Zusetzen eines Filterelementes maßgeblich durch Materialteilchen bewirkt wird, welche sich nahezu passend in die Filterporen oder Gewebeöffnungen eines Filterelementes einfügen. Bei einem solchen Einfügen eines Materialteilchens in eine in der Regel runde oder etwa quadratische Filterpore oder Gewebeöffnung ergeben sich einerseits hohe Haftkräfte, da das Teilchen an mehreren Flächen anliegt, und andererseits bietet ein solches Materialteilchen nur noch geringe Angriffsflächen für die Reinigungsflüssigkeit zum Entfernen der Filtrationsschicht.

Diese Problematik wird erfindungsgemäß dadurch überwunden, dass von der üblichen gleichmäßigen Gewebestruktur mit etwa quadratischen Gewebeöffnungen abgegangen und ein Filtergewebe gebildet ist, an dessen Filtrationsoberfläche die Filterporen als ausgeprägte Längsschlitze ausgebildet sind, bei denen die Länge zumindest fünfmal größer als die Breite ist. Bei der materialabhebenden Bearbeitung, insbesondere bei einem Schleifen, treten kaum Späne oder Materialteilchen mit einem derartigen Größenverhältnis auf. Es findet also kaum ein Zusetzen dieser länglichen Gewebeporen oder Gewebeöffnungen statt, so dass sich die Standzeit des Filterelementes erheblich verlängert. Die in der Regel etwa runden Materialteilchen, deren durchschnittlicher Durchmesser etwa der Breite einer derartigen schlitzartigen Gewebeöffnung entspricht, kann so eine derartige längliche Gewebeöffnung nur teilweise verschließen und sich auch nur mit einer verringerten Haftkraft darin festsetzen. Diese verringerte Haftkraft sowie die verbleibende große Angriffsfläche durch den erhöhten Freiraum um das Materialteilchen erlaubt ein leichteres und damit besseres Entfernen eines solchen Materialteilchens aus dem Filterelement im Reinigungszyklus des Filterelementes.

Eine bevorzugte Ausführungsform der Erfindung besteht darin, dass die Längsschlitze eine Breite von größer gleich 10 µm aufweisen. Vorzugsweise beläuft sich die Breite in einem Größenbereich von 10 µm bis 100 µm.

Die Teilchenrückhaltung sowie die gute Reinigungseigenschaft wird nach einer weiteren Ausgestaltung der Erfindung noch dadurch verbessert, dass die Längsschlitze eine Größe von 30 µm bis 400 µm, vorzugsweise in Kettrichtung, aufweisen. Mit einem solchen Größenbereich können auch relativ kleine Materialteilchen zuverlässig zurückgehalten werden, wobei dennoch eine gute Reinigung und damit eine hohe Standzeit des Filterelementes erreichbar sind.

Weiterhin ist es nach der Erfindung vorteilhaft, dass das Filtergewebe mit einer Porenzahl von größer als 1200 Poren/cm² ausgebildet ist. Vorzugsweise sind bis zu 2000 Poren/cm² und mehr vorgesehen. Durch diese hohe Anzahl länglicher Poren wird eine sehr feine Filtration bei einer weiterhin guten Flüssigkeitsdurchsatzleistung erreicht.

Zur Herstellung eines derartigen Filterelementes ist es nach einer weiteren Ausführungsform der Erfindung besonders zweckmäßig, dass die Fadenzahl in Schuss- und/oder in Kettrichtung zwischen 10 und 240 Fäden/cm beträgt. Die Anzahl der Fäden in Schuss- und Kettrichtung ist dabei so aufeinander abgestimmt, dass einerseits die gewünschte ausgeprägte Längskontur der Gewebeporen an der Filtrationsoberseite erreicht wird und andererseits eine große Porendichte/cm² gegeben ist.

Grundsätzlich ist es möglich, dass die Längsschlitze in Schussrichtung ausgebildet sind. Zur Herstellung des Filtergewebes ist es besonders vorteilhaft, dass die Längsschlitze in Kettrichtung des Filtergewebes ausgebildet sind.

Insbesondere zu diesem Zweck ist es nach der Erfindung zweckmäßig, dass die Anzahl der Fäden in Kettrichtung höher ist als die Anzahl der Fäden in Schussrichtung. Bei einem entsprechenden Weben kann so gezielt die Ausbildung der Längsschlitze in der Gewebeoberseite erreicht werden.

Eine weitere Ausführungsform der Erfindung besteht darin, dass die Kettfäden des Filtergewebes aus Monofilfäden und die Schussfäden des Filtergewebes aus Mono- oder Multifilfäden gebildet sind. Eine derartige Anordnung erlaubt einen besonders formstabilen Aufbau des Filtergewebes bei hoher Flexibilität, insbesondere wenn das Gewebe als ein umlaufendes Bandfilter eingesetzt wird.

Zur Erhöhung der Festigkeit und der Standzeit ist es nach einer Weiterbildung der Erfindung vorteilhaft, dass an einer von der Filtrationsoberseite abgewandten Unterseite ein Stützgewebe vorgesehen ist.

Bevorzugt weist bei dem erfindungsgemäßen Filterelement das Filtergewebe eine Dichte der Kettfäden auf, welche zumindest um den Faktor 5 höher als die Dichte der Kettfäden des Stützgewebes ist. Weiter ist es vorteilhaft, dass der Durchmesser der Kettfäden des Stützgewebes im Verhältnis zum Durchmesser der Kettfäden des Filtergewebes größer 2,3 ist. Weiterhin ist es bevorzugt, dass ein Verhältnis des Durchmessers des Schussfadens des Stützgewebes im Verhältnis zum Durchmesser des Filtergewebes größer gleich 2 ist. Eine gute Verbindung zwischen dem eigentlichen Filtergewebe und einem Stützgewebe wird dadurch erreicht, dass beide miteinander verwebt sind, insbesondere durch einen Bindeschuss oder eine Bindekette.

Die Filtergewebeschicht ist in vorteilhafterweise mit einer Köper- oder Satinbindung mit ausgeprägten Schlitzporen im Verhältnis von Länge zur Breite von größer 8 : 1 ausgebildet. Das Stützgewebe kann zu einer besonders guten Kraftaufnahme in einer Panama-Bindung 2/2 gewebt sein. Als Fadenmaterial ist bevorzugt PP, PET, PEEK oder E-CTFE vorgesehen. Vorzugsweise ist ein Doppel-Gewebe aus PET, PP oder PA-Monofilamenten vorgesehen. Eine Dicke der oberen Gewebeschicht mit den länglichen Gewebeporen ist kleiner gleich 150 µm. Die Dicke der gesamten Gewebestruktur und insbesondere des Filterelementes ist vorzugsweise größer als 500 µm. Vorteilhaft ist es, wenn das Filterelement einen Luftdurchlass von typisch größer 2500 Liter/qm und Sek. aufweist.

Die Erfindung umfasst weiterhin eine Bearbeitungsanlage mit einer Bearbeitungsmaschine, insbesondere einer Schleifmaschine, zur materialabtragenden Bearbeitung unter Einsatz von Spülflüssigkeit, welche zum Abtrennen von abgetragenen Materialteilchen aus der Spülflüssigkeit eine Filtereinrichtung aufweist, welche dadurch gekennzeichnet ist, dass eine Filtereinrichtung, wie sie vorausgehend beschrieben wurde, vorgesehen ist.

Insbesondere bei Schleifanlagen entstehen beim Schleifen sehr feine Materialpartikel mit einer runden oder etwa sphärischen Form, welche in hohem Maße dazu neigen, übliche Filtertücher sehr schnell zuzusetzen. Mit der erfindungsgemäßen Filtereinrichtung und einem erfindungsgemäßen Filterelement kann so in vielen Fällen der Aufbau des Filterkuchens so beeinflusst werden, dass der Anstieg des Durchströmungswiderstandes stark reduziert wird. Im Rahmen von Vergleichsversuchen hat sich etwa ergeben, dass eine herkömmliche Takt- oder Standzeit um 25 % bis 100 % erhöht werden kann.

Die Bearbeitungsanlage weist eine Leitungsanordnung auf, mit welcher über eine Pumpe das mit Materialteilchen angereicherte Spülmedium zu der Filtereinrichtung gepumpt wird. Die Spülflüssigkeit durchläuft in der Filtereinrichtung aufgrund einer Druckdifferenz, welche durch einen Überdruck, einen Unterdruck oder einen Gravitationsdruck erzeugt sein kann, das erfindungsgemäß ausgebildete Filtergewebe. Die Druckdifferenz kann dabei im Bereich von 1 bar, vorzugsweise 0,8 bar liegen. Das von den Materialpartikeln entreicherte Spülmedium wird dann über eine Rückführleitung in einen Vorratsbehälter geleitet, aus welchem die Spülflüssigkeit wieder an die Bearbeitungsstelle an der Bearbeitungsmaschine gepumpt werden kann.

In der Bearbeitungsanlage kann das Filterelement in der Filtereinrichtung diskontinuierlich oder kontinuierlich, etwa als ein laufendes Filterband, gewechselt werden.

Die Erfindung betrifft weiterhin ein Filterelement, insbesondere für die zuvor beschriebene Filtereinrichtung. Dieses Filterelement ist dadurch gekennzeichnet, dass das Filterelement ein Filtergewebe aufweist, an dessen Filtrationsoberseite die Gewebeporen als ausgeprägte Längsschlitze ausgebildet sind, welche ein Verhältnis Länge zur Breite von größer gleich 5 : 1 besitzen. Vorzugsweise beträgt das Verhältnis eine Größe von größer gleich 8 : 1. Ein derartiges Filterelement mit einem solchen Filtergewebe ist insbesondere zur Filtration von abgetragenen Materialteilchen aus Spülflüssigkeiten bei der materialabtragenden Bearbeitung geeignet. Das Filterelement kann aber auch bei der Filtration von Suspensionen aus dem Bereich der Chemie, des Bergbaus und der Umwelttechnik eingesetzt werden, bei welchen ebenfalls vergleichbare Materialpartikel ausfiltriert werden müssen. Das Filterelement kann auf kontinuierlichen oder diskontinuierlichen Filtervorrichtungen, etwa Vakuumbandfiltern, Rotationstrommelfiltern und einer Vielzahl weiterer bekannter Filtervorrichtungen eingesetzt werden.

Die Erfindung umfasst weiterhin ein Verfahren zur materialabtragenden Bearbeitung, wobei die abgetragenen Materialteilchen mittels einer Spülflüssigkeit abtransportiert und mittels einer Filtereinrichtung aus der Spülflüssigkeit abgetrennt werden, wobei eine Filtereinrichtung eingesetzt wird, wie sie vorausgehend beschrieben wurde.

## Patentansprüche

1. Filtereinrichtung zum Behandeln einer Spülflüssigkeit für eine materialabtragende Bearbeitung, mit einem Filterelement, durch welches die Spülflüssigkeit zum Abtrennen von abgetragenen Materialteilchen hindurchleitbar ist,
**dadurch gekennzeichnet,**
**dass** das Filterelement ein Filtergewebe aufweist, an dessen Filtrationsoberseite Gewebeporen als ausgeprägte Längsschlitze ausgebildet sind, welche ein Verhältnis Länge zu Breite von ≥ 4 : 1 aufweisen.

2. Filtereinrichtung nach Anspruch 1,
**dadurch gekennzeichnet,**
**dass** die Längsschlitze eine Breite von ≥ 10 µm aufweisen.

3. Filtereinrichtung nach Anspruch 1 oder 2,
**dadurch gekennzeichnet,**
**dass** die Längsschlitze eine Größe von 30 µm bis 400 µm, vorzugsweise in Kettrichtung, aufweisen.

4. Filtereinrichtung nach einem der Ansprüche 1 bis 3,
**dadurch gekennzeichnet,**
**dass** das Filtergewebe mit einer Porenzahl von größer als 1.200 Poren/cm² ausgebildet ist.

5. Filtereinrichtung nach einem der Ansprüche 1 bis 4,
**dadurch gekennzeichnet,**
**dass** die Fadenzahl in Schuss- und/oder in Kettrichtung zwischen 10 und 240 Fäden pro cm beträgt.

6. Filtereinrichtung nach einem der Ansprüche 1 bis 5,
**dadurch gekennzeichnet,**
**dass** die Längsschlitze in Kettrichtung des Filtergewebes ausbildet sind.

7. Filtereinrichtung nach einem der Ansprüche 1 bis 6,
**dadurch gekennzeichnet,**
**dass** die Anzahl der Fäden in Schussrichtung höher ist als die Anzahl der Fäden in Kettrichtung.

8. Filtereinrichtung nach einem der Ansprüche 1 bis 7,
**dadurch gekennzeichnet,**
**dass** die Kettfäden des Filtergewebes als Monofilfäden und die Schussfäden des Filtergewebes als Mono- oder Multifilfäden gebildet sind.

9. Filtereinrichtung nach einem der Ansprüche 1 bis 8,
**dadurch gekennzeichnet,**
**dass** an einer von der Filtrationsoberseite abgewandten Unterseite ein Stützgewebe vorgesehen ist.

10. Bearbeitungsanlage mit einer Bearbeitungsmaschine, insbesondere einer Schleifmaschine, zur materialabtragenden Bearbeitung unter Einsatz von Spülflüssigkeit, welche zum Abtrennen von abgetragenen Materialteilchen aus der Spülflüssigkeit eine Filtereinrichtung aufweist,
**dadurch gekennzeichnet,**
**dass** eine Filtereinrichtung nach einem der Ansprüche 1 bis 9 vorgesehen ist.

11. Filterelement, insbesondere für eine Filtereinrichtung nach einem der Ansprüche 1 bis 9,
**dadurch gekennzeichnet,**
**dass** das Filterelement ein Filtergewebe aufweist, an dessen Filtrationsoberseite die Gewebeporen als ausgeprägte Längsschlitze ausgebildet sind, welche ein Verhältnis Länge zur Breite von ≥ 4 : 1 besitzen.

12. Verfahren zur materialabtragenden Bearbeitung, wobei die abgetragenen Materialteilchen mittels einer Spülflüssigkeit abtransportiert und mittels einer Filtereinrichtung aus der Spülflüssigkeit abgetrennt werden,
**dadurch gekennzeichnet,**
**dass** eine Filtereinrichtung nach einem der Ansprüche 1 bis 9 eingesetzt wird.

## Claims

1. Filter means for treating a flushing liquid for material-removing machining, with a filter element, through which the flushing liquid can be passed for separating removed material particles,
**characterized in that**
the filter element has a filter fabric, on the filtration upper side of which fabric pores are designed as distinctive longitudinal slots which have a length-width ratio of ≥ 4 : 1.

2. Filter means according to claim 1,
**characterized in that**
the longitudinal slots have a width of ≥ 10 µm.

3. Filter means according to claim 1 or 2,
**characterized in that**
the longitudinal slots have a size ranging from 30 µm to 400 µm, preferably in the warp direction.

4. Filter means according to any one of claims 1 to 3,
**characterized in that**
the filter fabric is designed with a pore count of greater than 1,200 pores/cm².

5. Filter means according to any one of claims 1 to 4,
**characterized in that**
the thread count in the weft and/or warp direction ranges between 10 and 240 threads per cm.

6. Filter means according to any one of claims 1 to 5,
**characterized in that**
the longitudinal slots are designed in the warp direction of the filter fabric.

7. Filter means according to any one of claims 1 to 6,
**characterized in that**
the number of threads in the weft direction is higher than the number of threads in the warp direction.

8. Filter means according to any one of claims 1 to 7,
**characterized in that**
the warp threads of the filter fabric are formed as monofilament threads and the weft threads of the filter fabric as monofilament or multifilament threads.

9. Filter means according to any one of claims 1 to 8,
**characterized in that**
on an underside facing away from the filtration upper side a supporting fabric is provided.

10. Machining installation with a machining unit, in particular a grinding machine, for material-removing machining using flushing liquid, which has a filter means for separating removed material particles from the flushing liquid,
**characterized in that**
a filter means according to any one of claims 1 to 9 is provided.

11. Filter element, in particular for a filter means according to any one of claims 1 to 9,
**characterized in that**
the filter element has a filter fabric, on the filtration upper side of which the fabric pores are designed as distinctive longitudinal slots which have a length-width ratio of ≥ 4 : 1.

12. Method for material-removing machining, wherein the removed material particles are led away by a flushing liquid and separated from the flushing liquid by a filter means,
**characterized in that**
a filter means according to any one of claims 1 to 9 is used.

## Revendications

1. Dispositif de filtration pour le traitement d'un liquide de rinçage pour un usinage par enlèvement de matière, avec un élément de filtration à travers lequel on peut faire passer le liquide de rinçage pour la séparation des particules de matière enlevées,
**caractérisé :**
**en ce que** l'élément de filtration comprend un tissu de filtration, sur la partie supérieure de filtration duquel des pores de tissu sont constitués sous la forme de fentes longitudinales prononcées qui présentent un rapport longueur sur largeur supérieur ou égal à 4 : 1.

2. Dispositif de filtration selon la revendication 1,
**caractérisé :**
**en ce que** les fentes longitudinales ont une largeur égale ou supérieure à 10 µm.

3. Dispositif de filtration selon la revendication 1 ou 2,
**caractérisé :**
**en ce que** les fentes longitudinales ont une taille comprise entre 30 µm et 400 µm, de préférence dans la direction des fils de chaîne.

4. Dispositif de filtration selon une des revendications 1 à 3,
**caractérisé :**
**en ce que** le tissu de filtration est formé avec un nombre de pores supérieur à 1200 pores/cm².

5. Dispositif de filtration selon une des revendications 1 à 4,
**caractérisé :**
**en ce que** le nombre des fils dans la direction des fils de trame et/ou dans la direction des fils de chaîne représente entre 10 et 240 fils par cm.

6. Dispositif de filtration selon une des revendications 1 à 5,
**caractérisé :**
**en ce que** les fentes longitudinales sont formées dans la direction des fils de chaîne du tissu de filtration.

7. Dispositif de filtration selon une des revendications 1 à 6,
**caractérisé :**
**en ce que** le nombre des fils dans la direction des fils de trame est supérieur au nombre des fils dans la direction des fils de chaîne.

8. Dispositif de filtration selon une des revendications 1 à 7,
**caractérisé :**
**en ce que** les fils de chaîne du tissu de filtration sont formés en tant que fils à mono-filament et les fils de trame du tissu de filtration sont formés en tant que fils à mono-filament ou à multi-filaments.

9. Dispositif de filtration selon une des revendications 1 à 8,
**caractérisé :**
**en ce qu'**un tissu de support est prévu d'un côté inférieur opposé au côté supérieur de filtration.

10. Installation d'usinage avec une machine d'usinage, en particulier une machine à rectifier, pour l'usinage par enlèvement de matière sous l'action d'un liquide de rinçage, qui comprend un dispositif de filtration pour la séparation des particules de matière enlevées du liquide de rinçage,
**caractérisée :**
**en ce qu'**il est prévu un dispositif de filtration selon une des revendications 1 à 9.

11. Elément de filtration, en particulier pour un dispositif de filtration selon une des revendications 1 à 9,
**caractérisé :**
**en ce que** l'élément de filtration comprend un tissu de filtration, sur la partie supérieure de filtration duquel les pores du tissu sont constitués sous la forme de fentes longitudinales prononcées qui présentent un rapport longueur sur largeur supérieur ou égal à 4 : 1.

12. Procédé d'usinage par enlèvement de matière, selon lequel les particules de matière enlevées sont évacuées au moyen d'un liquide de rinçage et sont séparées du liquide de rinçage au moyen d'un dispositif de filtration,
**caractérisé :**
**en ce qu'**on utilise un dispositif de filtration selon une des revendications 1 à 9.
